(19)

Europäisches
Patentamt
European
Patent Office
Office européen
des brevets

(11) **EP 2 439 403 A1**

(12) **EUROPEAN PATENT APPLICATION**

(43) Date of publication:
**11.04.2012 Bulletin 2012/15**

(21) Application number: **11181458.8**

(22) Date of filing: **15.09.2011**

(51) Int Cl.:
*F03D 1/06* (2006.01)   *B64C 23/06* (2006.01)
*F01D 5/14* (2006.01)   *F04D 29/32* (2006.01)
*F04D 29/68* (2006.01)   *B63B 1/00* (2006.01)
*F01D 5/16* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.09.2010 US 893728**

(71) Applicant: **General Electric Company
Schenectady, NY 12345 (US)**

(72) Inventors:
• **Drack, Lorenz Edwin
  Niskayuna, NY 12309 (US)**
• **Rangwalla, Akil Abbas
  Niskayuna, NY 12309 (US)**
• **Sengundermudaliar, Gowri Jaganathan
  Niskayuna, NY 12309 (US)**

(74) Representative: **Bedford, Grant Richard
Global Patent Operation - Europe
GE International Inc.
15 John Adam Street
London WC2N 6LU (GB)**

(54) **System and method for attenuating the noise of airfoils**

(57)   A system and method for reducing the noise of an airfoil 62 is provided. The airfoil 62 includes a main portion 64 including a leading edge and a trailing edge 66. The airfoil further comprises a noise attenuator 86 coupled to the main portion and disposed proximate to at least a portion of the trailing edge. The noise attenuator 86 has a chord length in the range of about 0.5 to about 5 times a trailing edge thickness and is fixed relative to the trailing edge. The airfoil 62 can be a rotating blade deployed on a wind turbine 18. The airfoil 62 can also be deployed on an aircraft as a fixed wing.

FIG. 4

EP 2 439 403 A1

**Description**

The invention relates generally to airfoils, and in particular, to noise attenuating systems for the reduction of noise produced during the operation of airfoils. Embodiments of airfoils include and are not limited to airplane wings, wind turbine blades and propellers blades.

During the operation of an airfoil, the fluid, for example air, flows across the airfoil forming a boundary layer. Generally the boundary layer is laminar in the proximity of a leading edge of the airfoil and transitions to a turbulent state over the body of the airfoil. Certain applications of airfoils involve their rotation, and such rotating airfoils are referred to as blades. Blades can be deployed in a wind turbine, wherein the flow of fluid across the blade causes it to rotate. Such blades can also be deployed in an aircraft, wherein an aircraft engine rotates the blade and the rotation causes the fluid to flow across the blade. Another application of airfoils involves their deployment as a wing of an aircraft and therefore does not involve the rotation of the airfoil.

During operation, the airfoils generate considerable noise. In the case of a wind turbine, the noise is also a major constraint in utilizing the wind turbines for power production as the noise may bother people in residential areas located nearby.

One cause of the noise generated during the operation of the airfoil is the interaction of a trailing edge of the airfoil with the turbulent flow in the turbulent boundary layer. A turbulent flow includes various groups of randomly oriented turbulent eddies of various sizes and intensities that are associated with a turbulent kinetic energy. Generally, the higher the turbulent kinetic energy associated with the turbulent eddies, and the closer the turbulent eddies are to a scattering edge, the higher the noise produced. Furthermore, groups of large eddies are associated with low frequency noise and groups of small eddies are associated high frequency noise. The distribution of eddy sizes, the proximity of eddies to scattering surfaces such as an airfoil, and the response of the human ear to noise determines perceived noise levels.

It is desirable to reduce the noise generated during operation of the airfoil while maintaining the aerodynamic performance of the airfoil.

In accordance with one exemplary embodiment disclosed herein, an airfoil is provided. The airfoil includes a main portion including a leading edge and a trailing edge. The airfoil further comprises a noise attenuator coupled to the main portion and disposed at a predetermined gap from the trailing edge and proximate to at least a portion of the trailing edge. The noise attenuator has a chord length in a range of about 0.5 to about 5 times a trailing edge thickness and is fixed relative to the trailing edge.

In accordance with an exemplary embodiment disclosed herein, a wind turbine comprising a plurality of airfoils is provided. Each airfoil includes a main portion comprising a leading edge and a trailing edge. The airfoil further comprises a noise attenuator coupled to the main portion and disposed at a predetermined gap from the trailing edge and proximate to at least a portion of the trailing edge. The noise attenuator has a chord length in a range of about 0.5 to about 5 times a trailing edge thickness and is fixed relative to the trailing edge.

In accordance with one exemplary embodiment disclosed herein, a method for reducing noise of an airfoil is provided. The method includes disposing a noise attenuator proximate to a trailing edge of a main portion of the airfoil. The noise attenuator is configured to break-up turbulent eddies of a fluid flow across the main portion and reduce a turbulent kinetic energy associated with the fluid flow.

Various features, aspects, and advantages of the present invention will become better understood when the following detailed description is read with reference to the accompanying drawings in which like characters represent like parts throughout the drawings, wherein:

FIG 1 illustrates a turbulent kinetic energy field associated with a fluid flow in a region proximate and downstream of a trailing edge of a conventional airfoil;

FIG 2 illustrates a turbulent kinetic energy field associated with a fluid flow in a region further downstream of a trailing edge of a conventional airfoil;

FIG 3 is a diagrammatical representation of a wind turbine deploying a plurality of airfoils in accordance with an exemplary embodiment of the present invention.

FIG. 4 is a diagrammatical representation of an airfoil in accordance with an exemplary embodiment of FIG 3.

FIG 5 illustrates the effect of a noise attenuator on a turbulent kinetic energy field associated with a fluid flow proximate to a trailing edge and the noise attenuator of a airfoil in accordance with an exemplary embodiment of FIG 3;

FIG 6 illustrates the effect of a noise attenuator on a turbulent kinetic energy field associated with a fluid flow in a region downstream of the noise attenuator of an airfoil in accordance with an exemplary embodiment of FIG 3;

FIG 7 illustrates a wake structure's timescales of a fluid flow downstream of a trailing edge of an airfoil;

FIG 8 illustrates the effect of a noise attenuator on a wake structure's timescales of a fluid flow downstream of a trailing edge of a airfoil in accordance with an exemplary embodiment of FIG 3;

FIG 9 is a graph illustrating a comparison of the distribution of pressure across a conventional airfoil and across an airfoil in accordance with an exemplary embodiment of FIG 3.

FIG 10 is a diagrammatical representation of an airfoil including a trailing edge and a noise attenuator having a plurality of wires in accordance with an exemplary embodiment of the present invention; and

FIG. 11 is a diagrammatical representation of an airfoil including a trailing edge and a noise attenuator having a metal wire with a diamond cross section in accordance with an exemplary embodiment of the present invention.

As discussed in detail below, various embodiments of the present invention are an airfoil. In some embodiments, the airfoil includes a blade deployed on a wind turbine or an aircraft. In other embodiments, the airfoil includes a wing deployed on an aircraft. This invention may, however, be embodied in many different forms and should not be construed as limited to the embodiments set forth herein; rather these embodiments are provided so that this disclosure will be thorough and complete and will fully convey the scope of the invention to those skilled in the art.

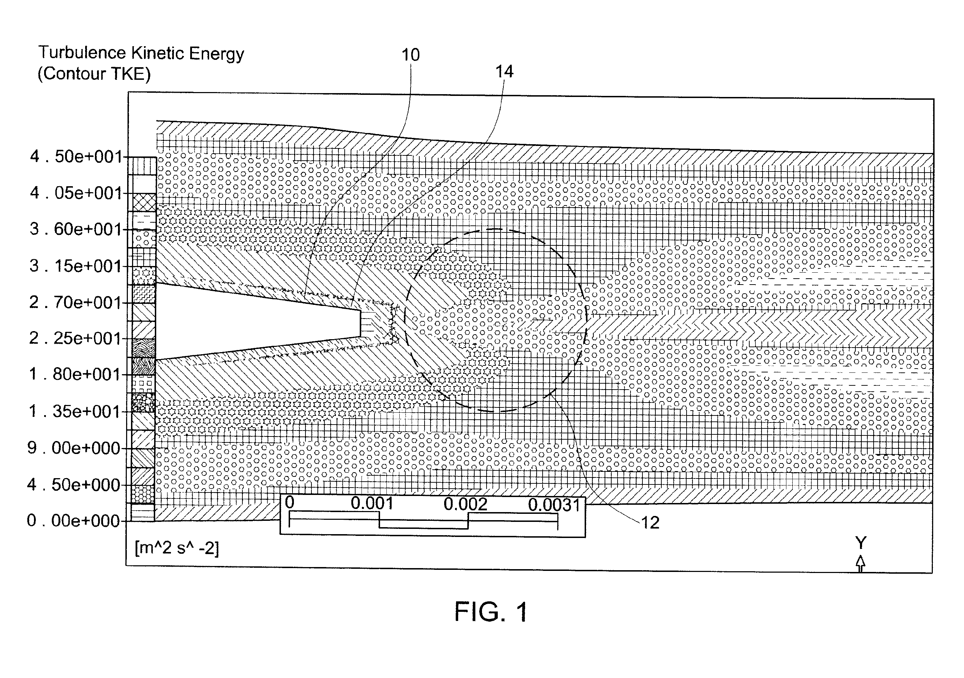

FIG 1 illustrates a cross section of a conventional airfoil 10 and the turbulent kinetic energy field representing the turbulent kinetic energy associated with the turbulent eddies in a region 12 downstream and proximate to a trailing edge 14 of the conventional airfoil 10. During operation of the conventional airfoil 10, the fluid, for example air, flows across the conventional airfoil 10 and causes rotation of the conventional airfoil 10 in the case of a wind turbine blade. The flow is generally turbulent in the region 12 in the proximity of the trailing edge 14 and includes randomly oriented groups of turbulent eddies of various size and intensity. The turbulent eddies in the fluid flow are associated with the turbulent kinetic energy which depends on the three dimensional velocity components associated with the turbulent eddies. The interaction of the turbulent eddies with the trailing edge 14 produces noise during operation of the conventional airfoil 10.

The equation for turbulent kinetic energy (k) in the k-ω model for incompressible flow is given by:

$$\frac{\partial k}{\partial t} + U_j \frac{\partial k}{\partial x_j} = \tau_{ij} \frac{\partial U_i}{\partial x_j} - \beta^* k\omega + \frac{\partial}{\partial x_j}\left[\left(\nu + \sigma^* \nu_T\right)\frac{\partial k}{\partial x_j}\right],$$

where k is the turbulent kinetic energy given by the formula $0.5^* < u_i u_i >$. The term $\tau_{ij} \dfrac{\partial U_i}{\partial x_j}$ in the above equation represents the production of turbulent kinetic energy where $\tau_{ij}$ is the Reynold's stress tensor and $\dfrac{\partial U_i}{\partial x_j}$ is the gradient of the mean flow field. Using the Boussinesq model for the relationship between the Reynolds stress tensor and the rate of strain in the mean flow, the production of the turbulent kinetic energy, $\tau_{ij} \dfrac{\partial U_i}{\partial x_j}$ can be written as:

$$\tau_{ij} \frac{\partial U_i}{\partial x_j} = \frac{k}{\omega} S_{ij} S_{ij},$$

where Sij is the strain tensor. Research has shown that the Boussinesq model does overpredict the value of turbulent kinetic energy in certain regions of the flow.

Several strategies have been developed to limit this overproduction of turbulent kinetic energy. Another model for estimating the production of turbulence kinetic energy is given by:

$$\tau_{ij}\frac{\partial U_i}{\partial x_j} = \frac{k}{\omega}\Omega_{ij}\Omega_{ij} \quad \text{or} \quad \frac{k}{\omega}S_{ij}\Omega_{ij},$$

where $\Omega_{ij}$ is the vortical part of the strain tensor. According to this model, the vortical part of the strain tensor results in production of turbulent kinetic energy. Reducing the vortical part of strain rate will result in a reduction in the turbulent kinetic energy. It should be noted that the above models are only exemplary and are not limiting the invention. Various other models exist and can be used to describe the phenomenon of generation of turbulent kinetic energy.

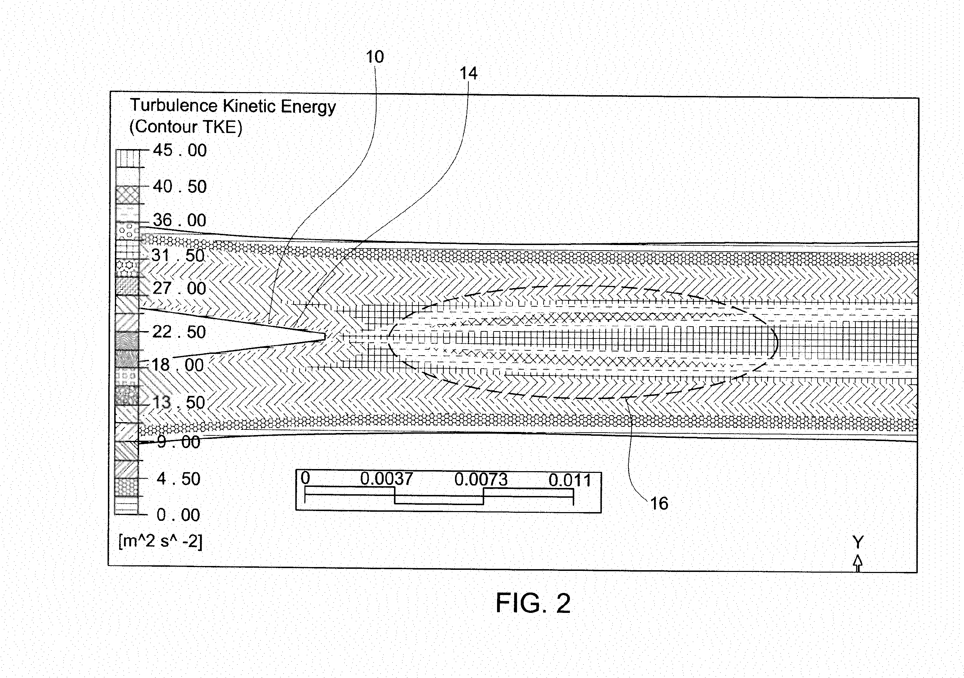

FIG 2 illustrates the turbulent kinetic energy field representing the turbulent kinetic energy associated with the turbulent eddies in a region 16, downstream of the trailing edge 14 of the conventional airfoil 10. The region 16 includes fluid flow comprising groups of turbulent eddies. The production of the turbulent kinetic energy in the region 16 depends largely on the vortical part of the strain tensor as discussed in conjunction with FIG 1.

In reference to both FIGs 1 and 2, the region 16 is further downstream of the region 12. The greater the turbulent kinetic energy associated with the turbulent eddies in the regions 12 and 16, the greater is the noise produced during operation of the conventional airfoil 10. Furthermore, groups of large eddies are associated with low frequency noise and groups of small eddies are associated with high frequency noise. The distribution of eddy sizes, the proximity of eddies to scattering surfaces such as an airfoil, and the response of the human ear to noise determines perceived noise levels.

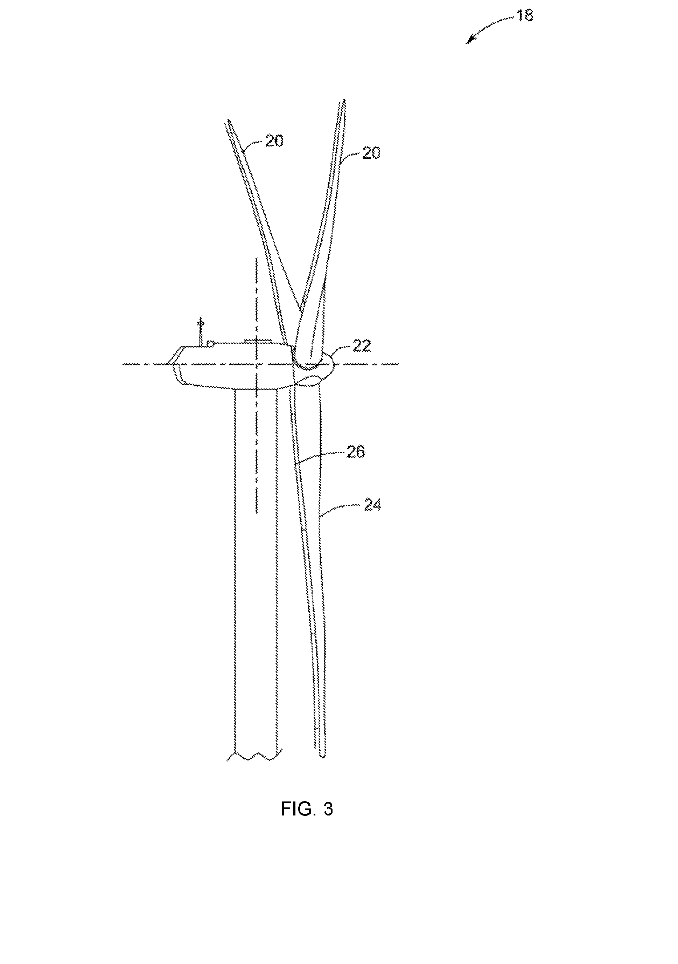

FIG 3 illustrates a wind turbine 18 deploying a plurality of airfoils 20 in accordance with an exemplary embodiment of the present invention. As the operation of wind turbine involves rotation of the airfoils 20, the airfoils 20 can also be referred to as blades 20. It should be noted, however, that the invention is also applicable to various other types of airfoils, such as wings of an aircraft, and is not limited to blades. The airfoils 20 are coupled to a hub 22 of the wind turbine 18. The flow of air across the airfoil 20 causes the airfoil 20 to rotate. It should be noted that the embodiment of wind turbine 18 is exemplary and the airfoil 20 can be deployed in other applications, for example, an aircraft wherein the airfoil 20 is rotated using the power of an aircraft engine and the rotation causes the fluid to flow across the airfoil 20. The airfoil 20 includes a main portion 24 and a noise attenuator 26 disposed in the proximity of the main portion 24. The noise attenuator 26 is configured to reduce noise generated during operation of the airfoil 20. Details of the noise attenuator 26 are discussed in detail in conjunction with the subsequent figures.

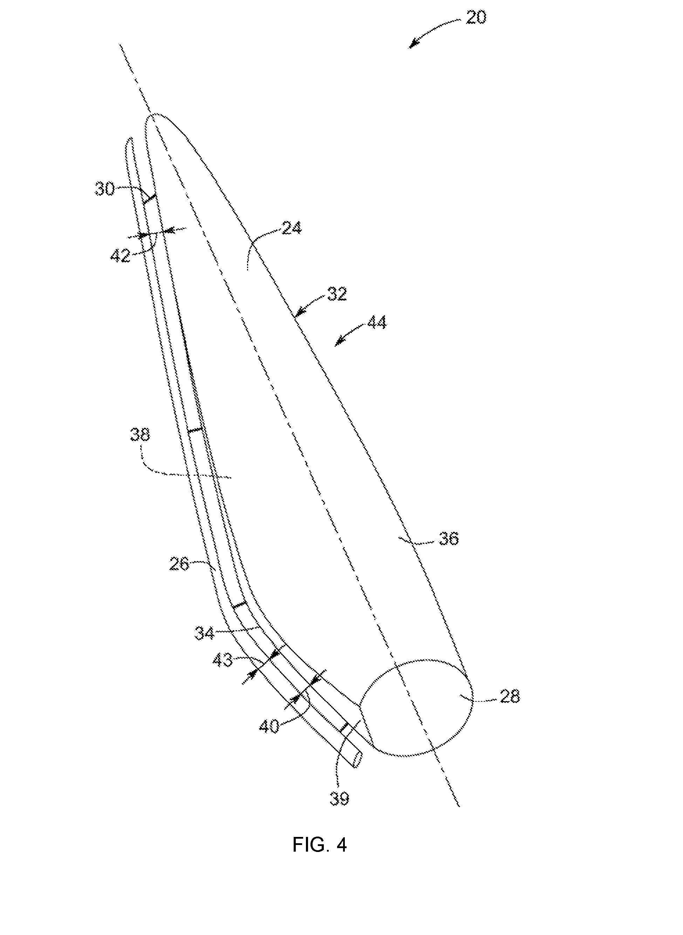

FIG 4 illustrates the airfoil 20 in accordance with an exemplary embodiment of FIG 3. The airfoil 20 includes the main portion 24 and the noise attenuator 26 disposed in the proximity of the main portion 24. The airfoil 20 is coupled to the hub 22 (illustrated in FIG 3) through a portion 28. The noise attenuator 26 is coupled to the main portion 24 via a plurality of connectors 30. The main portion 24 of the airfoil 20 includes a leading edge 32, a trailing edge 34, a high pressure side 36, and a low pressure side 38. The leading edge 32 and the trailing edge 34 are formed by an intersection of the high pressure side 36 and the low pressure side 38. The trailing edge 34 is associated with a trailing edge thickness 39. Specifically, the noise attenuator 26 is coupled to the trailing edge 34 of the main portion 24 via the plurality of connectors 30 and is disposed downstream of the trailing edge 34. In a specific embodiment, the noise attenuator 26 is fixed relative to the trailing edge 34. It is to be understood that the illustration of the plurality of connectors 30 in FIG 4 is only exemplary and various other means can be used to couple the noise attenuator 26 to the main portion 24.

The length and shape of the main portion 24 generally depends on the application of the airfoil 20. It is to be noted that the shape of the main portion 24, as illustrated in FIG 4, is only an exemplary embodiment and is not to scale. Further, the invention is not limited to the particular length and shape of the main portion 24 as illustrated in FIG 4. In an exemplary embodiment, the length L of the main portion 24 is approximately 5 meters. In some embodiments, L can be in a range of about 0.5 meters to about 130 meters. As an example, the shape and length of the main portion 24 as used in a wind turbine 18 may be different from the shape and length of the main portion 24 as used on an aircraft engine. Further, the airfoil 20 as illustrated in FIG 4 is a blade as the operation of airfoil 20 involves a rotation of the airfoil 20. In some embodiments, the airfoil 20 can be deployed on an aircraft as a wing.

In an exemplary embodiment, the noise attenuator 26 is disposed approximately parallel to the trailing edge 34 at a predetermined gap 40 equal to approximately two times a trailing edge thickness 39. In an embodiment the predetermined gap can be in a range of 0.5 to 5 times a trailing edge thickness 39. In an exemplary embodiment, the predetermined gap 40 is uniform through the length of the trailing edge 34. In other embodiments, the predetermined gap 40 is non-uniform through the length of the trailing edge 34, i.e., the predetermined gap 40 is different from the predetermined gap 42. In the exemplary embodiment illustrated in FIG 4, the noise attenuator 26 is a metal wire with a circular cross section. In some embodiments, the noise attenuator 26 is a rod having a rigid structure. It should be noted that the material and structural rigidity of the material of the noise attenuator 26 are not a limitation of the invention. The noise attenuator 26 has a chord length 43, which, in case of a circular noise attenuator 26, is equal to a diameter of the metal attenuator 26. In a specific embodiment, the chord length 43 of the noise attenuator 26 is in a range of about 0.5 to about 5 times the trailing edge thickness 39.

During operation of the airfoil 20, the fluid flow across the airfoil 20 initiates in a region 44 in the proximity of the leading edge 32. When the fluid flows across the main portion 24, a boundary layer is formed over the main portion 24. Generally the boundary layer is laminar in the proximity of the leading edge 32 and transitions to a turbulent state over the high/low pressure sides 36, 38 of the airfoil 20. In the region proximate and downstream of the trailing edge 34, the fluid flow forms a wake. The turbulent fluid flow in the wake includes randomly oriented groups of turbulent eddies of varying size and intensity. The turbulent eddies in the fluid flow are associated with a turbulent kinetic energy which depends on the three dimensional velocity components associated with the turbulent eddies.

The interaction of the turbulent eddies with the trailing edge 34 causes noise during operation of the airfoil 20. The noise attenuator 26 reduces the noise generated by reducing the turbulent kinetic energy associated with the turbulent eddies and by breaking up the wake structure downstream of the trailing edge 34 as discussed in the subsequent figures.

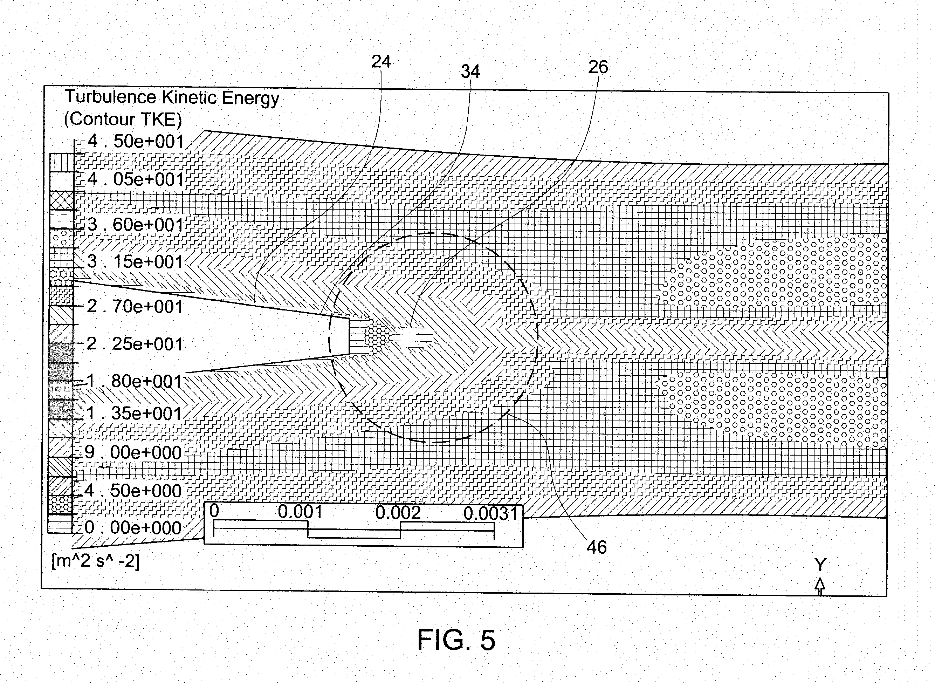

FIG 5 illustrates the effect of the noise attenuator 26 on the turbulent kinetic energy field representing the turbulent kinetic energy associated with the turbulent eddies in the fluid flow in a region 46 proximate to the trailing edge 34 and the noise attenuator 26, in accordance with an exemplary embodiment of FIG 3. The figure illustrates a cross section of the airfoil 20 (illustrated in FIG 4) including the main portion 24, the trailing edge 34, and the region 46 proximate to the trailing edge 34 and the noise attenuator 26. The region 46 is analogous to the region 12 illustrated in FIG 1. The region 46 includes randomly oriented groups of turbulent eddies of various size and intensity and associated with a turbulent kinetic energy. The noise attenuator 26 includes a metal wire as illustrated in the embodiment of FIG 3. The production of turbulent kinetic energy in the region 46 is given by the formula discussed in conjunction with FIG 1. The presence of the noise attenuator 26 causes a reduction in the vortical strain rates proximate to the trailing edge 34 and also proximate to the noise attenuator 26. The vortical strain rates are reduced both upstream and downstream of the noise attenuator 26. Due to reduction in the strain rates, the turbulent kinetic energy reduces in intensity. Thus the turbulent kinetic energy associated with the turbulent eddies in the region 46 is lower than the turbulent kinetic energy associated with the turbulent eddies in the region 12.

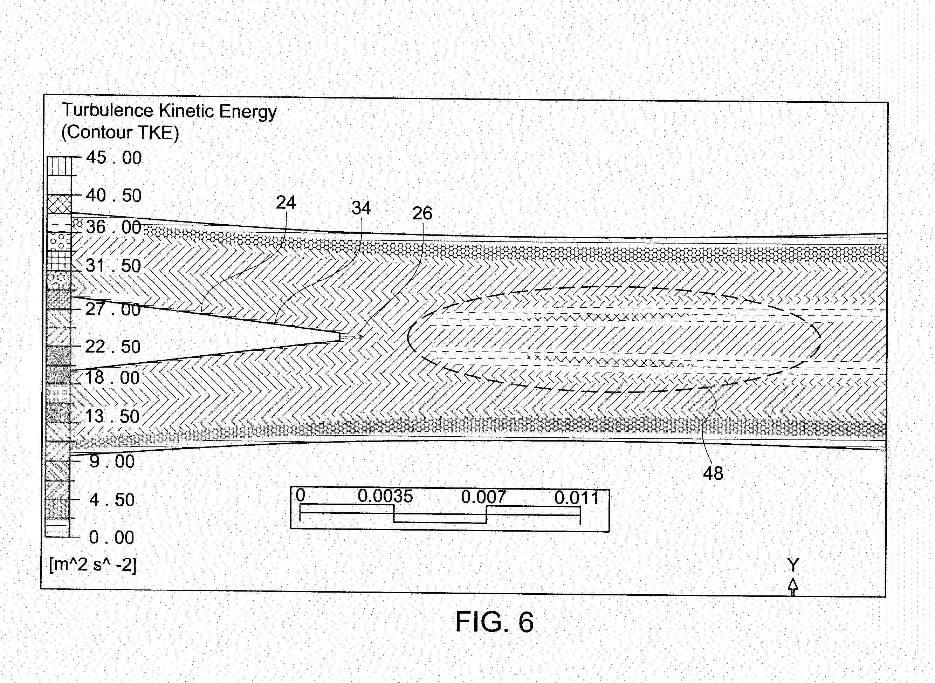

FIG 6 illustrates the effect of the noise attenuator 26 on the turbulent kinetic energy field representing the turbulent kinetic energy associated with the turbulent eddies in a region 48, located downstream of the noise attenuator 26 in accordance with an exemplary embodiment of FIG 3. In reference to FIG 2, 5 and 6, the region 48 is downstream of the region 46 and is analogous to the region 16. Again in reference to FIG 6, the noise attenuator 26 includes a metal wire as illustrated in the embodiment of FIG 3. The noise attenuator 26 reduces the vortical strain rates in the region 48. The reduction in the vortical strain rates result in a reduction in the turbulent kinetic energy in the region 48. Thus the turbulent kinetic energy associated with the turbulent eddies in the region 48 is lower than the turbulent kinetic energy associated with the turbulent eddies in the region 16 (illustrated in FIG 2).

As the regions 46, 48 (FIGs 5,6) are associated with a lower turbulent kinetic energy than the regions 12, 16 (FIGs 1,2), the airfoil 20 generates less noise than the conventional airfoil 10.

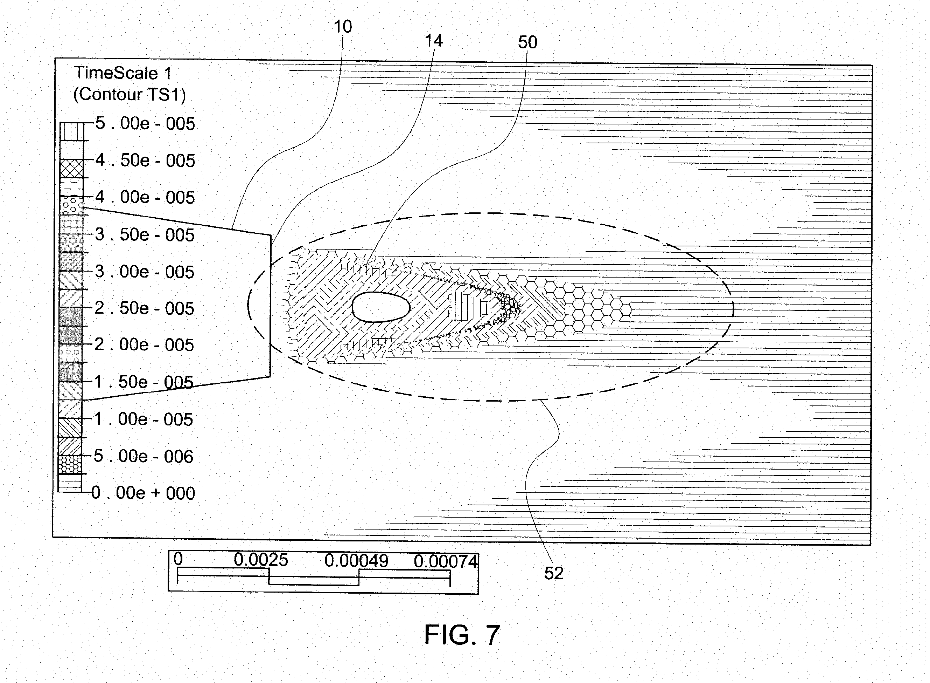

FIG 7 illustrates the eddy sizes - or equivalently - timescales of a wake structure 50 in a region 52 (analogous to the region 12 as illustrated in FIG 1) downstream of the trailing edge 14 of the conventional airfoil 10. The wake structure 50 includes groups of turbulent eddies. The noise generated during operation of the conventional airfoil 10 is proportional to the distribution of sizes - or equivalently - timescales of the turbulent eddies in the wake structure 50.

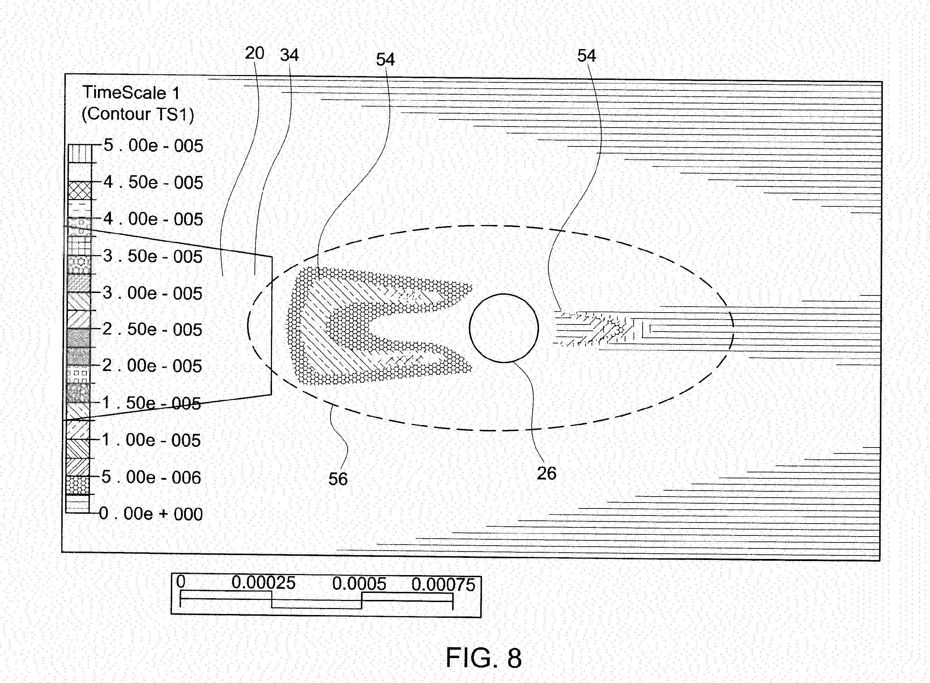

FIG 8 illustrates effect of the noise attenuator 26 on the eddy sizes - or equivalently - timescales of the wake structure 54 in the region 56, downstream of the trailing edge 34 in accordance with an exemplary embodiment illustrated in FIG 3. The figure illustrates a section of the airfoil 20 as illustrated in FIG 4. The timescales of the wake structure represent the time period of existence of the eddies before dissipation. Generally, large turbulent eddies are in existence for a longer period of time and hence are associated with a longer timescale, the converse is true vis-a-vis smaller turbulent eddies. The region 56 is analogous to the region 52 illustrated in FIG 7. The noise attenuator 26 includes a metal wire as illustrated in the embodiment of FIG 3. The presence of the noise attenuator 26 breaks up the turbulent eddies resulting in a breaking up of the wake structure 54. Groups of large turbulent eddies are broken into groups of small eddies. In other words, the timescales of the existence of the groups of turbulent eddies is reduced. The reduction in timescale implies that the frequency of the acoustic energy derived from the turbulent eddies is increased and moved into a higher frequency, which the human ear perceives very inefficiently. Furthermore, high frequency noise attenuates quickly with distance as compared to the low frequency noise. The overall result is a reduction in the noise level in the neighborhood of the operation of the airfoil 20.

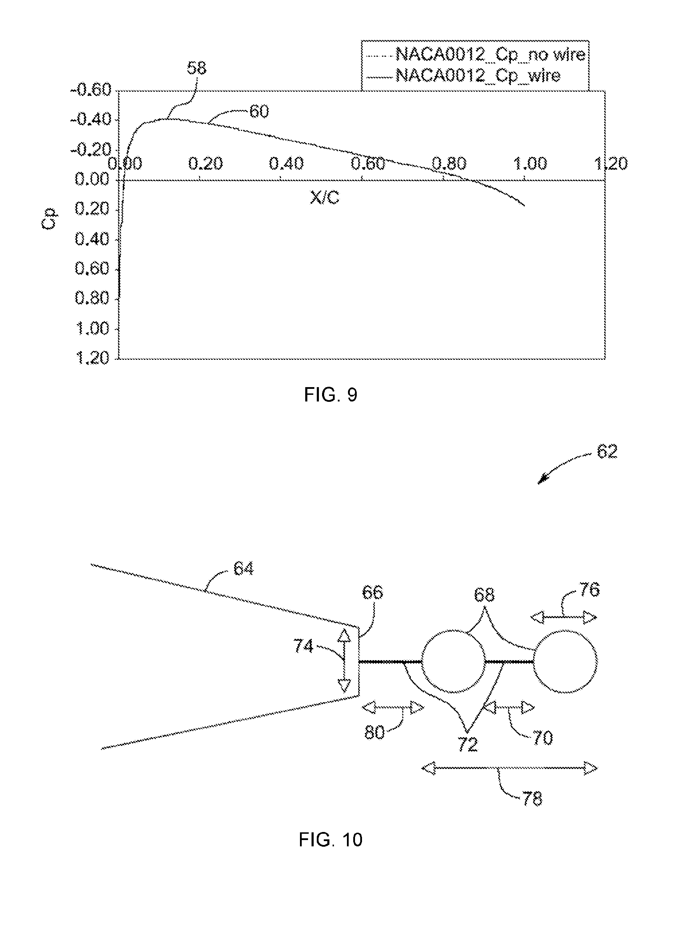

FIG 9 is a graph illustrating the comparison of the distribution of pressure across the airfoil 20 and the conventional airfoil 10. The graph represents the variation in the pressure coefficient (Cp) represented on the Y - axis , with respect to. x/c, represented on the X - axis , wherein Cp describes the relative pressure in the flow field, c is a chord length of the airfoil 20 and the conventional airfoil 10. In reference to both FIG 4 and 9, x is a variable chord length measured from the leading edge 32 of the airfoil 20. x/c is equal to zero at the leading edge 32 and is equal to one at the trailing edge 34. Similarly, in the conventional airfoil, xis a variable chord length measured from a leading edge (not shown) of the conventional airfoil 10. The graph includes a curve 58 for the pressure coefficient across the airfoil 20 and a curve 60 for the pressure coefficient across the conventional airfoil 10. The graph illustrates that the curves 58 and 60 overlap over each other and thus illustrates that the aerodynamic performance of the airfoil 20 is the same as that of the conventional airfoil 10. The presence of the noise attenuator 26, therefore, does not adversely affect the aerodynamic performance of the airfoil 20.

FIG 10 illustrates a section of an airfoil 62 in accordance with an exemplary embodiment of the present invention. The airfoil 62 includes a main portion 64, a trailing edge 66, and a noise attenuator 68. The noise attenuator 68 includes two metal wires with circular cross section disposed approximately parallel and proximate to the trailing edge 66. The two metal wires are separated from each other through a predetermined distance 70 and are coupled to the trailing edge 66 and to each other via a plurality of connectors 72. The main portion 64 is analogous to the main portion 24, as illustrated in FIG 4. In an embodiment the predetermined distance 70 is equal to two times a trailing edge thickness 74. According to an embodiment, the predetermined distance 70 is uniform through the length of the trailing edge 66.

According to another embodiment, the predetermined distance 70 may vary through the length of the trailing edge 66. In some embodiments, the predetermined distance 70 is in a range of about 0.5 to about 5 times the trailing edge thickness 74.

Each of the metal wires of the noise attenuator 68 is associated with the chord length 76, which is equal to the diameter of the metal wire in case of a circular metal wire. In case of multiple metal wires, a chord length 78 of the noise attenuator 68 is the span of the noise attenuator 68 along the fluid flow. In a specific embodiment, the chord length 78 is in a range of about 0.5 to about 5 times the trailing edge thickness 74. In an exemplary embodiment, the noise attenuator 68 is separated from the trailing edge 66 through a predetermined gap 80. In an embodiment the predetermined gap 80 can be in a range of 0.5 to 5 times the trailing edge thickness 74. In an exemplary embodiment, the predetermined gap 80 is uniform through the length of the trailing edge 66. In other embodiments, the predetermined gap 80 is non-uniform through the length of the trailing edge 66.

It is to be understood that the embodiment presented in FIG 4 and 10 are only exemplary. Noise attenuators, other than noise attenuators 26 and 68 are also envisaged. Numerous variations are possible in disposing the noise attenuators in the proximity of the trailing edge. For example, the distance between the noise attenuator 26, 68 and the respective trailing edge 34, 66 may vary through the length of the trailing edge. Similarly, in some embodiments, other types of noise attenuators other than metal wires are also envisaged. In some embodiments, the noise attenuators 26, 68 are disposed proximate to only a portion of the trailing edge and not throughout the length of the trailing edge. Generally, the distance of the noise attenuator 26, 68 from the trailing edge 34, 66, the portion of the trailing edge 34, 66 where the noise attenuator 26, 68 are disposed, and the number of metal wires in the noise attenuator 26, 68 placed in the proximity of the trailing edge 34, 66 are determined to ensure maximum noise reduction.

Further, it should be noted that the embodiment illustrated in FIG 4 and 10 are exemplary and the invention is not limited by the number of metal wires used in the noise attenuators 26, 68, the cross section of the metal wires, the distances of the metal wires from the trailing edge, or the distances between the metal wires. The distances between the metal wires or the distances between the metal wires from the trailing edge 66 can be non-uniform through the length of the trailing edge 66.

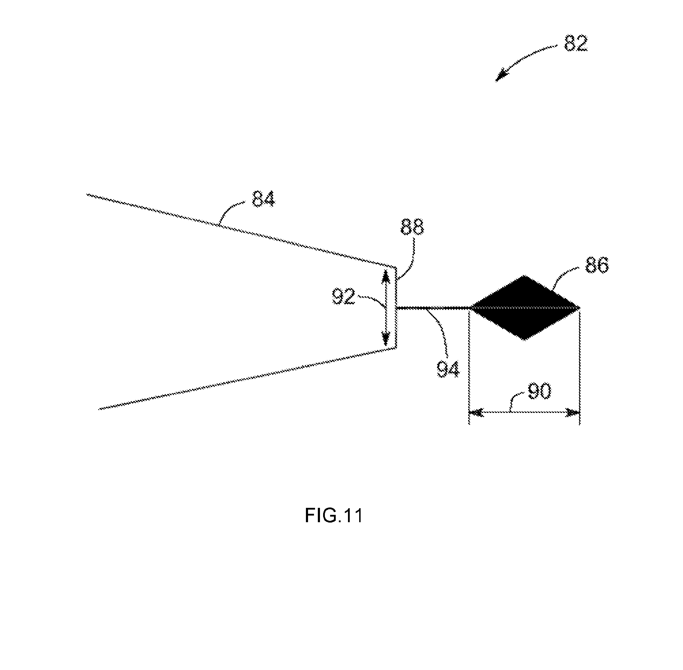

FIG 11 illustrates a cross section of an airfoil 82 in accordance with an exemplary embodiment of the present invention. The figure illustrates a main portion 84 and a noise attenuator 86 disposed proximate to a trailing edge 88. The noise attenuator 86, as illustrated in the FIG 11 is a metal wire with a diamond cross section. In a specific embodiment, a chord length 90 of the noise attenuator 86 is equal to a trailing edge thickness 92. The noise attenuator 86 is coupled to the trailing edge 88 via a plurality of connectors 94 (only one connector is shown as FIG 11 presents a sectional view). The main portion 84 is analogous to the main portion 24 as illustrated in FIG 4. It should be noted that the present invention is not limited to the cross sections of the noise attenuators illustrated in FIGs 4, 10, 11. Numerous variations in the cross sections of the noise attenuators are possible, as will be evident to a person skilled in the art. Further, the cross section of the noise attenuators may be non-uniform through the length of the trailing edge.

Embodiments of the present invention describe the noise attenuators 20,68,86 including one or more metal wires, which can be associated with certain degree of flexibility. However, it should be noted that deploying of a rigid structure, such as a rod, as a noise attenuator 20,68,86 is also envisaged. As discussed in the embodiments above, the rod may have a circular or any other cross section, which may vary through the length of the trailing edge. The rod can be disposed proximate to the whole length of the trailing edge or can be disposed proximate to only a portion of the trailing edge. Further, materials other than metal, for example fiberglass, can be used for the construction of the noise attenuators 20, 68, 86. Generally, the material or rigidity of the noise attenuators 26, 68, 86, nor the means of attachment of the noise attenuators 26, 68, 86 to the trailing edge, as shown in the drawings, are exemplary and not restricted to the illustrations in the drawings.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

1. An airfoil, comprising:

a main portion comprising a leading edge and a trailing edge; and

a noise attenuator coupled to the main portion and disposed proximate to at least a portion of the trailing edge, wherein the noise attenuator is having a chord length in a range of about 0.5 to about 5 times a trailing edge thickness;

wherein the noise attenuator is separated from the portion of the trailing edge by a predetermined gap and the noise attenuator is fixed relative to the trailing edge.

2. The airfoil of clause 1, wherein the noise attenuator comprises a wire.

3. The airfoil of any preceding clause, wherein the wire has a circular cross section.

4. The airfoil of any preceding clause, wherein the wire has a diamond cross section.

5. The airfoil of any preceding clause, wherein the predetermined gap is in a range of about 0.5 to about 5 times the trailing edge thickness.

6. The airfoil of any preceding clause, wherein the predetermined gap comprises a non-uniform gap.

7. The airfoil of any preceding clause, wherein the predetermined gap comprises a uniform gap.

8. The airfoil of any preceding clause, wherein the noise attenuator is coupled to the trailing edge of the main portion.

9. The airfoil of any preceding clause, wherein the noise attenuator comprises a plurality of wires.

10. The airfoil of any preceding clause, wherein the plurality of wires are separated from each other through a predetermined distance.

11. The airfoil of any preceding clause, wherein the predetermined distance is uniform.

12. The airfoil of any preceding clause, wherein the noise attenuator is configured to break up turbulent eddies of a fluid flow across the airfoil.

13. The airfoil of any preceding clause, wherein the noise attenuator is configured to reduce turbulent kinetic energy associated with a fluid flow across the airfoil.

14. The airfoil of any preceding clause, wherein the airfoil comprises a blade.

15. The airfoil of any preceding clause, wherein the noise attenuator is disposed downstream of the trailing edge.

16. The airfoil of any preceding clause, wherein the noise attenuator comprises a rod.

17. The airfoil of any preceding clause, wherein the airfoil comprises a wing.

18. A wind turbine, comprising:

a plurality of airfoils coupled to a hub, each airfoil comprising a main portion including a leading edge and a trailing edge, wherein at least one airfoil comprising of:

a noise attenuator coupled to the main portion and disposed proximate to at least a portion of the trailing edge, wherein the noise attenuator is having a chord length in a range of about 0.5 to about 5 times a trailing edge thickness;

wherein the noise attenuator is separated from the portion of the trailing edge by a predetermined gap and the noise attenuator is fixed relative to the trailing edge.

19. The wind turbine of any preceding clause, wherein the noise attenuator comprises a wire.

20. The wind turbine of any preceding clause, wherein the predetermined gap is in a range of 0.5 to 5 times the trailing edge thickness.

21. The wind turbine of any preceding clause, wherein the predetermined gap is non-uniform.

22. The wind turbine of any preceding clause, wherein the noise attenuator comprises a plurality of wires.

23. The wind turbine of any preceding clause, wherein the noise attenuator comprises a rod.

24. A method, comprising:

disposing a noise attenuator proximate to a trailing edge of a main portion;

wherein the noise attenuator is configured to:

break up turbulent eddies of a fluid flow across the main portion; and

reduce turbulent kinetic energy associated with the fluid flow.

25. A method comprising:

rotating an airfoil in response to a fluid flow across the airfoil;

breaking up turbulent eddies of the fluid flow using a noise attenuator disposed proximate to a trailing edge of a main portion of the airfoil; and

reducing turbulent kinetic energy associated with the fluid flow using the noise attenuator.

26. The method of any preceding clause, wherein the step of breaking up turbulent eddies comprises reducing timescales of the existence of turbulent eddies.

27. The method of any preceding clause, wherein the step of reducing timescales comprises increasing the frequency level of an energy derived from the turbulent eddies.

**Claims**

1. An airfoil (62), comprising:

   a main portion (64) comprising a leading edge and a trailing edge (66); and
   a noise attenuator (86) coupled to the main portion (64) and disposed proximate to at least a portion of the trailing edge (66), wherein the noise attenuator (86) has a chord length in a range of about 0.5 to about 5 times a trailing edge thickness;
   wherein the noise attenuator (86) is separated from the portion of the trailing edge (66) by a predetermined gap and the noise attenuator (86) is fixed relative to the trailing edge.

2. The airfoil (62) of claim 1, wherein the noise attenuator (86) comprises a wire.

3. The airfoil (62) of claim 2, wherein the wire has a circular cross section.

4. The airfoil (62) of any preceding claim, wherein the predetermined gap comprises a non-uniform gap.

5. The airfoil (62) of any preceding claim, wherein the noise attenuator (86) is coupled to the trailing edge (66) of the main portion (64).

6. The airfoil (62) of any preceding claim, wherein the noise attenuator (86) is configured to break up turbulent eddies of a fluid flow across the airfoil.

7. The airfoil (62) of any preceding claim, wherein the airfoil (62) comprises a blade.

8. A method comprising:

rotating an airfoil (62) in response to a fluid flow across the airfoil;
breaking up turbulent eddies of the fluid flow using a noise attenuator (86) disposed proximate to a trailing edge of a main portion (64) of the airfoil; and
reducing turbulent kinetic energy associated with the fluid flow using the noise attenuator (86).

9. The method of claim 8, wherein the step of breaking up turbulent eddies comprises reducing timescales of the existence of turbulent eddies.

10. The method of claim 9, wherein the step of reducing timescales comprises increasing the frequency level of an energy derived from the turbulent eddies.

Turbulence Kinetic Energy (Contour TKE)

FIG. 1

Turbulence Kinetic Energy
(Contour TKE)

45.00
40.50
36.00
31.50
27.00
22.50
18.00
13.50
9.00
4.50
0.00
[m^2 s^-2]

0    0.0037    0.0073    0.011

FIG. 2

FIG. 3

FIG. 4

FIG. 5

FIG. 6

FIG. 7

FIG. 8

EP 2 439 403 A1

FIG. 9

FIG. 10

FIG.11

# EP 2 439 403 A1

**Europäisches Patentamt**
**European Patent Office**
**Office européen des brevets**

## EUROPEAN SEARCH REPORT

**Application Number**

EP 11 18 1458

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 112 928 A2 (DLR EV [DE] DEUTSCH ZENTR LUFT & RAUMFAHRT [DE]) 4 July 2001 (2001-07-04) | 1,4-10 | INV. F03D1/06 B64C23/06 |
| Y | * paragraphs [0001], [0002], [0004], [0005], [0029], [0047] * * figures 4,21,26 * | 2,3 | F01D5/14 F04D29/32 F04D29/68 B63B1/00 |
| X | CH 697 204 A5 (JEAN CLAUDE DOUCHET [CH]) 25 June 2008 (2008-06-25) | 8-10 | F01D5/16 |
| Y | * paragraphs [0001], [0011], [0018] * * figure 2 * | 2,3 | |
| X | EP 1 149 761 B1 (EADS AIRBUS GMBH [DE] AIRBUS GMBH [DE]) 31 October 2001 (2001-10-31) * paragraphs [0001], [0016], [0019], [0020], [0022] * * figures 1,2,3 * | 1-6,8-10 | |
| X | EP 1 775 464 A2 (GAMESA INNOVATION & TECH SL [ES]) 18 April 2007 (2007-04-18) | 8-10 | **TECHNICAL FIELDS SEARCHED (IPC)** |
| Y | * paragraphs [0001], [0012] * * figures 1,3 * | 2,3 | F03D B64C |
| A | EP 0 652 367 A1 (STORK PROD ENG [NL]) 10 May 1995 (1995-05-10) * the whole document * | 1-10 | F04D |
| A | WO 2010/100237 A2 (VESTAS WIND SYS AS [DK]; ROMBLAD JONAS [DK]; GODSK KRISTIAN BALSCHMIDT) 10 September 2010 (2010-09-10) * page 1 * * figure 1 * | 1-10 | |

The present search report has been drawn up for all claims

| Place of search | Date of completion of the search | Examiner |
|---|---|---|
| Munich | 17 February 2012 | Lux, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

**ANNEX TO THE EUROPEAN SEARCH REPORT**
**ON EUROPEAN PATENT APPLICATION NO.**          EP 11 18 1458

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2012

| Patent document cited in search report | | Publication date | Patent family member(s) | | Publication date |
|---|---|---|---|---|---|
| EP 1112928 | A2 | 04-07-2001 | AT | 491634 T | 15-01-2011 |
| | | | EP | 1112928 A2 | 04-07-2001 |
| CH 697204 | A5 | 25-06-2008 | NONE | | |
| EP 1149761 | B1 | 31-10-2001 | AT | 323023 T | 15-04-2006 |
| | | | CA | 2344950 A1 | 25-10-2001 |
| | | | DE | 10020177 A1 | 08-11-2001 |
| | | | EP | 1149761 A1 | 31-10-2001 |
| | | | ES | 2261290 T3 | 16-11-2006 |
| | | | JP | 2001354198 A | 25-12-2001 |
| | | | US | 2001032907 A1 | 25-10-2001 |
| EP 1775464 | A2 | 18-04-2007 | CN | 1936320 A | 28-03-2007 |
| | | | EP | 1775464 A2 | 18-04-2007 |
| | | | ES | 2318925 A1 | 01-05-2009 |
| | | | US | 2007077150 A1 | 05-04-2007 |
| EP 0652367 | A1 | 10-05-1995 | CN | 1110368 A | 18-10-1995 |
| | | | EP | 0652367 A1 | 10-05-1995 |
| | | | FI | 944650 A | 05-05-1995 |
| | | | NL | 9301910 A | 01-06-1995 |
| | | | NO | 943757 A | 05-05-1995 |
| | | | US | 5533865 A | 09-07-1996 |
| WO 2010100237 | A2 | 10-09-2010 | EP | 2404055 A2 | 11-01-2012 |
| | | | WO | 2010100237 A2 | 10-09-2010 |

EPO FORM P0459

For more details about this annex : see Official Journal of the European Patent Office, No. 12/82